Europäisches Patentamt

European Patent Office

Office européen des brevets

(11) Publication number: **0 310 423**
**A1**

## (12) EUROPEAN PATENT APPLICATION

(21) Application number: 88309110.0

(22) Date of filing: 30.09.88

(51) Int. Cl.⁴: **C 08 J 5/18**
**D 01 F 6/46**

(30) Priority: 30.09.87 JP 244246/87

(43) Date of publication of application:
05.04.89 Bulletin 89/14

(84) Designated Contracting States:
AT BE CH DE ES FR GB GR IT LI LU NL SE

(71) Applicant: MITSUI PETROCHEMICAL INDUSTRIES, LTD.
2-5, Kasumigaseki 3-chome Chiyoda-ku
Tokyo 100 (JP)

(72) Inventor: Yagi, Kazuo
2-6, Misono 1-chome
Ohtake-shi Hiroshima-ken (JP)

Takeda, Hiroyuki
3277-1, Ohno-Saeki-gun
Hiroshima-ken (JP)

(74) Representative: Cresswell, Thomas Anthony et al
J.A. Kemp & Co. 14 South Square Gray's Inn
London WC1R 5EU (GB)

(54) Drawn shaped body of ultra high molecular weight ethylene/alpha-olefin copolymer having a high breaking energy, and process for its preparation.

(57) A dope of an ultra-high-molecular-weight ethylene/alpha-olefin copolymer is extruded from a nozzle of a shaping die at a temperature sufficient to maintain the dope in a flowable state, the extrudate is taken up at a draft ratio of at least 3 and crystallized to form a preliminarily drawn oriented body of the ultra-high-molecular-weight ethylene/alpha-olefin copolymer, and the preliminarily drawn oriented body is drawn at a draw ratio of at least 3. The obtained drawn shaped body has a high breaking energy.

Fig. 2

Description

# DRAWN SHAPED BODY OF ULTRA-HIGH-MOLECULAR-WEIGHT ETHYLENE/α-OLEFIN COPOLYMER HAVING HIGH BREAKING ENERGY AND PROCESS FOR PREPARATION THEREOF

Background of the Invention

(1) Field of the Invention

The present invention relates to a highly oriented drawn shaped body of an ultra-high-molecular-weight ethylene/α-olefin copolymer and a process for the preparation thereof. More particularly, the present invention relates to a process for preparing a drawn body of an ultra-high-molecular-weight ethylene/α-olefin copolymer by the dope-shaping method, which comprises forming a high-concentration dope of an ultra-high-molecular-weight ethylene/α-olefin copolymer, extruding the dope from a nozzle, taking up the extrudate while drafting the extrudate, and crystallizing the ultra-high-molecular-weight ethylene/α-olefin copolymer in the extrudate, and a drawn shaped body having a high breaking energy, which is prepared according to this process.

(2) Description of the Prior Art

Many industrial fibers characterized by a high strength are known. For example, carbon fibers and aramid fibers can be mentioned. Carbon fibers are used for various composite materials while utilizing the high strength thereof. However, the elongation at break is very low because of a high elastic modulus, one of the characteristics of carbon fibers, and therefore, in general, the carbon fibers cannot resist a deformation exceeding 1% and the carbon fibers are mainly used in the fields where the deformation range is very narrow. However, composite bodies comprising carbon fibers are weak against a suddenly occurring large deformation, for example, a shock deformation, and troubles often arise. This is due to a low breaking energy characteristic because of a low elongation at break. Aramid fibers are improved in this point and therefore, the aramid fibers have been used in the fields where a shock deformation is cause and carbon fibers cannot be used, for example, for the production of running rigings.

However, Kevlar 49 (supplied by du Pont), a typical instance of aramid fibers, has an elongation at break of about 2% and as compared with carbon fibers having a strength comparable to that of Kevlar 49 (2.6 GPa), the breaking energy characteristic is improved only about 2 times. Accordingly, it cannot be considered that use of Kevlar 49 in this field does not include any risk.

Trials made to improve the elastic modulus and strength of a high-molecular-weight polymer having a molecular weight of several hundred thousands to about 2,000,000, especially high-molecular-weight linear polyethylene, have recently been reported. For example, Japanese Patent Application Laid-Open Specification No. 107506/80, Japanese Patent Application Laid-Open Specification No. 150408/81, Japanese Patent Application Laid-Open Specification No. 128213/82 and Japanese Patent Application Laid-Open Specification No. 5228/83 teach that a dilute solution of ultra-high-molecular-weight polyethylene is spun and obtained filaments are drawn. Furthermore, Japanese Patent Application Laid-Open Specification No. 130313/84 discloses a process in which ultra-high-molecular-weight polyethylene is melt-mixed with a wax, the kneaded mixture is extruded and the extrudate is cooled, solidified and then drawn. Moreover, Japanese Patent Application Laid-Open Specification No. 187614/84 discloses a process in which a molten mixture as mentioned above is extruded, the extrudate is drafted, cooled and solidified and the solidified extrudate is then drawn. According to the teachings of these prior art references, we drew an undrawn yarn composed of polyethylene having a molecular weight of about 1,900,000 at draw ratios of 20, 25 and 30. In this example, it was found that when the draw ratio was 20, the strength was 2.5 GPa, the elongation at break was 4.5% and the breaking energy was 65 J/g, and that when the draw ratio was 25, the strength, elongation at break and breaking energy were 2.7 GPa, 3.6% and 55 J/g, respectively and when the draw ratio was 30, the strength, elongation at break and breaking energy were 3.1 GPa, 2.1% and 50 J/g, respectively. As is apparent from the results obtained in this example, the process in which ultra-high-molecular-weight linear polyethylene is super-drawn in the presence of a solvent or plasticizer attracts attention as means for maintaining high strength and high elongation at break and consequently, obtaining such a high breaking energy characteristic as not possessed by conventional high-elastic modulus and high-strength fibers.

However, as suggested by the results of the above-mentioned example conducted according to the disclosures of the prior art references, according to this process, the strength increases with increase of the draw ratio but the elongation at break decreases on the contrary, with the result that the breaking energy decreases with increase of the draw ratio. Namely, according to the above-mentioned process, a fiber improved in the breaking energy characteristic over other high-strength fibers can be obtained, but because of the above-mentioned relation between the strength and the elongation at break, the breaking energy does not exceed a certain level.

We intended to obtain a high-strength fiber from high-molecular-weight polyethylene in principle as in the foregoing prior art references, and we especially noted the breaking energy characteristic of the high-strength fiber as the factor to be further improved.

As the process for improving the breaking energy characteristics, there is known a process disclosed in Japanese Patent Application Laid-Open Specification No. 100710/84. This process is a process for the preparation of a high-molecular-weight polyethylene fiber having a high breaking energy, which comprises subjecting a drawn fiber composed of a polymer having a molecular weight of at least 400,000 and having a strength of at least 15 g/d to a thermal shrinkage treatment.

According to this process, although the elastic modulus is reduced by the thermal shrinkage, the elongation at break increases. Accordingly, we noted that in this process, supposing that the strength is not greatly changed, the breaking energy will increase. However, practically, the yarn strength is reduced by a quantity larger than the quantity of reduction proportional to increase of the section of the fiber by the thermal shrinkage, and about 50% of the strength is lost at a thermal shrinkage of 30%. As the result, the breaking energy increases only to the value about 1.5 to about 2 times the original value and the strength which is another property desired to be improved in the present invention is in inverse proportion to the value of the breaking energy, and therefore, the process is defective in that the freedom of setting of both the characteristics is very small.

Japanese Patent Application Laid-Open Specification No. 81612/83 discloses a process for preparing polyethylene filaments having a high tensile strength by spinning a high-molecular-weight polyethylene solution and drawing the spun filaments, wherein a solution of an ethylene polymer or ethylene copolymer containing at least one alkene having 3 to 8 carbon atoms in an amount of up to 5% by weight and having a weight average molecular weight Mw of at least 4 x 105 kg/kmole and a weight average molecular weight Mw/number average molecular weight Mn ratio smaller than 5 in at least 80% by weight of a solvent is spun at a temperature higher than the gel point of the solution, the spun solution is cooled below the gel point, and the obtained filament is drawn in the form of a solvent-containing or solvent-free gel to form a filament having a tensile strength of at least 1.5 GPa. Formation of a fiber having an excellent strength is the sole effect attained according to this process. In view of the general technical concept, it is deemed that reduction of the weight average molecular weight Mw/number average molecular weight Mn ratio, that is, narrowing of the molecular weight distribution, is suitable for attaining this effect, but for attaining this object, it is not preferable to render the ethylene chains heterogeneous by copolymerization. Furthermore, the above-mentioned laid-open specification has no example directed to an ethylene/alkene copolymer, and a substantial description or concept indicating that the value of the breaking energy is improved by use of this copolymer is not found in the above-mentioned laid-open specification.

Moreover, the polymer concentration actually taught is 2% by weight or 8% by weight and is very low. If the polymer concentration in the actually prepared polymer solution is so low, as is generally taught in B. Kald and A.J. Pennings, Journal of Materials Science, 15, 2584-2590 (1980), the number of the points of the mutual action between molecules, that is, the number of entanglements of molecular chains, is extremely small, and therefore, it is apprehended that a high breaking energy will not be attained by a high elastic modulus and a low elongation at break.

Moreover, the above-mentioned process is not advantageous from the economical viewpoint because the polymer concentration is 20% by weight at highest.

### Summary of the Invention

It is a primary object of the present invention to provide an ultra-high-molecular-weight polyethylene type drawn shaped body having prominently improved high breaking energy and high strength.

Another object of the present invention to prepare an ultra-high-molecular-weight polyethylene type drawn shaped body having a high breaking energy efficiently from a dope having a high polymer concentration of at least 20% by weight.

We found that if a dope containing an ultra-high-molecular-weight ethylene/$\alpha$-olefin copolymer formed by copolymerizing ethylene with a limited small amount of an $\alpha$-olefin having at least 4 carbon atoms is solution-or melt-spun and drawn and a solvent or plasticizer is extracted during this operation, there can be obtained an ultra-high-molecular-weight ethylene/$\alpha$-olefin copolymer drawn shaped body having prominently improved high breaking energy and high strength that cannot be found in conventional polyethylene drawn shaped bodies at all. It also was found that in this drawn shaped body, a high breaking energy can be attained without substantial degradation of the strength according to a process where the copolymerization ratio of the comonomer is strictly controlled, which is quite different from the conventional process where the breaking energy is improved by thermal shrinkage.

In accordance with one aspect of the present invention, there is provided a drawn shaped body of an ultra-high-molecular-weight ethylene/$\alpha$-olefin copolymer having an intrinsic viscosity [$\eta$]of at least 5 d$\ell$/g and containing an $\alpha$-olefin having at least 4 carbon atoms at a content of 0.2 to 5 mole%, wherein the orientation degree of the drawn shaped body is at least 0.93 determined as the orientation degree by the half width of the X-ray diffractometry and the breaking energy of the drawn shaped body is at least 80 J/g determined as the integration value of up to the breaking point in the stress-strain curve.

This drawn shaped body has further enhanced breaking energy and strength if the drawn shaped body has at least two crystal melting endothermic peaks when the measurement is conducted in the restricted state by a differential scanning calorimeter, the drawn shaped body has at least one crystal melting endothermic peak

3

(TP) at a temperature higher by at least 20° C than the inherent crystal melting temperature (Tm) of the ultra-high-molecular-weight ethylene/α-olefin copolymer determined as the main melting endothermic peak at the time of the second temperature elevation and the heat quantity based on this crystal melting endothermic peak (TP) is at least 15% of the total melting heat quantity.

The ultra-high-molecular-weight ethylene/α-olefin copolymer used for the production of the drawn shaped body of the present invention has an intrinsic viscosity of at least 5 dℓ/g and the content of the α-olefin having at least 4 carbon atom is 0.2 to 5 mole%. The intended drawn shaped body is prepared by preparing a dope comprising 15 to 80 parts by weight of this copolymer and 85 to 20 parts by weight of a diluent, extruding this dope from a molding die at a temperature maintaining a flowable state in the dope, taking up the extrudate at a draft ratio of at least 3, crystallizing the extrudate to a preliminarily drawn oriented body and drawing the preliminarily drawn oriented body at a draw ratio of at least 3.


Brief Description of the Drawings


Fig. 1 is a stress-strain curve of a drawn filament of an ultra-high-molecular-weight ethylene/α-olefin copolymer according to the present invention.

Fig. 2 is a stress-strain curve of a drawn filament of ultra-high-molecular-weight polyethylene.

Detailed Description of the Preferred Embodiments

The present invention is based on the surprising finding that if a spinning dope containing an ultra-high-molecular-weight copolymer obtained by copolymerizing ethylene with a limited amount of an α-olefin having at least 4 carbon atoms is solution-spun or melt-spun. the spun filament is drawn and a solvent or plasticizer is extracted during the above operation to form a drawn shaped body, there is obtained a drawn shaped body has prominently improved high breaking energy and high strength.

The breaking energy referred to herein is the energy necessary for breaking the drawn shaped body and is ordinarily calculated easily by integrating the load by the displacement at the tensile test, that is, by determining the stress-strain curve and measuring the area surrounded by this curve and the perpendicular line drawn from the breaking point to the strain axis. In general, in order to compare this value with those of other samples differing in the history, the sectional area, the length and the like, the value is normalized by dividing the value by the weight or volume of the sample. The breaking energy is sometimes expressed by the so-called toughness value obtained by multiplying the breaking stress (g/d) by the elongation (%) at break, but this method is wrong because the stress-strain curve has rarely a shape of a right-angled triangle or an analogous shape.

The physical properties of copolymers formed by introducing an α-olefin as the comonomer into ultra-high-molecular-weight polyethylene are not taught in literature references, and therefore, the theoretical ground of the prominent improvement of the breaking energy and strength in the so-obtained ultra-high-molecular-weight copolymer drawn shaped body cannot be known by analogy, but the reason is probably considered to be as follows.

The breaking energy of an ultra-high-molecular-weight polyethylene drawn shaped body is improved over that of, for example, an aramid fiber, and this is due to the extremely long chain. For example, the molecular weight of 1,000,000 is not large as the molecular weight of ultra-high-molecular-weight polyethylene, but if the molecular chain having this molecular weight is linearly straightened, the length is as large as 16μ, and in view of the spacing of the molecular level, this is a truly gigantic figure. It is considered that these gigantic molecules are gathered and arranged properly to form so-called extended chain crystals. However, this structure is not complete, and the defects in this structure are mutual entanglements of molecular chains. The concept of the influences of the entanglements of molecular chains on the formation of extended crystals is discussed in detail in Matsuo, Nippon Rheology Gakkaishi, 13, 4 (1985). In order to form extended chain crystals having a high elastic modulus and a high strength in combination and a high completeness, it is indispensable that folded chain crystals having entanglements in a number as small as possible should be used as the starting material. If folded chain crystals having a large number of entanglements are used, because of entanglements of the molecular chains, the molecular chains cannot be concentrated in the fiber axis direction of the drawn shaped body, effective for improving the strength, and a high elastic modulus or a high strength cannot be attained. Namely, the breaking energy is low.

Accordingly, it is one necessary condition for attaining a high breaking energy to exclude entanglements of molecular chains and thereby increase the strength. However, as extended chain crystals are brought close to perfection, the elongation at break, another condition necessary for attaining a high breaking energy, is drastically reduced. As is apparent from the foregoing description, the reason why the breaking energy cannot exceed a certain level in the ultra-high-molecular-weight polyethylene drawn shaped body formed according to the above-mentioned conventional technique is that increase of the strength and increase of the elongation at break, necessary for attaining a high breaking energy, are in a reverse relation to each other. Another reason why the breaking energy cannot be improved is that molecular chains are not entangled with one another, that is, the molecular chains are aggregated to one another only through a weakest binding force, that is, the van der Waals force.

As is apparent from the above-mentioned reasons, it is considered that in order to solve the foregoing problems and further improve the breaking energy, it is necessary that molecular chains should be gathered and arranged properly and should be concentrated in the fiber axis direction of the drawn shaped body, effective for increasing the strength, and simultaneously, a steric hindrance is given here and there in the molecular chains to entangle adjacent molecules more closely. It is considered that this steric hindrance is given by the -olefin comonomer in the present invention.

Consequently, it is considered that it is for the above-mentioned reasons that prominently improved high breaking energy and high strength, not attained in the conventional polyethylene drawn shaped bodies, are manifested when a spinning dope containing an ultra-high-molecular-weight ethylene/$\alpha$-olefin copolymer obtained by copolymerizing ethylene with a limited amount of an $\alpha$-olefin having at least 4 carbon atoms is solution- or melt-spun and drawn and a solvent or plasticizer is extracted during this operation.

For facilitating the understanding of the present invention, the starting material, preparation process and intended product will be described in sequence.

Starting Material

The ultra-high-molecular-weight ethylene/$\alpha$-olefin copolymer used in the present invention is obtained by slurry-polymerizing ethylene and an $\alpha$-olefin having at least 4 carbon atoms as the comonomer in an organic solvent by using a Ziegler type catalyst.

Butene-1, pentene-1, 4-methylpentene-1, hexene-1, heptene-1, octene-1 and mixtures of two or more of them can be used as the $\alpha$-olefin having at least 4 carbon atoms. Of these olefins, there are preferably used $\alpha$-olefins having at least 6 carbon atoms, such as 4-methylpentene-1, hexene-1 and octene-1. The amount used of the $\alpha$-olefin comonomer should be such as giving the above-mentioned $\alpha$-olefin content in the polymer chain. Moreover, the ultra-high-molecular-weight ethylene/$\alpha$-olefin copolymer should have a molecular weight corresponding to the above-mentioned intrinsic viscosity [$\eta$].

In the case where the $\alpha$-olefin content is lower than 0.2 mole%, it sometimes happens that a molecule entanglement structure effective for attaining a high breaking energy is not formed. In contrast, if the $\alpha$-olefin content exceeds 5 mole%, formation of a structure having molecular chains concentrated along the fiber axis, which is necessary for attaining a high strength, becomes difficult.

Determination of the $\alpha$-olefin component in the ultra-high-molecular-weight ethylene/$\alpha$-olefin copolymer is carried out by using an infrared spectrophotometer (supplied by Nippon Bunko Kogyo) in the present invention. More specifically, the absorbance at 1378 cm$^{-1}$, which represents the deformation vibration of the methyl group of the $\alpha$-olefin included in the ethylene chain, is measured, the measured value is converted to the number of methyl branches per 1000 carbon atoms by using a calibration curve formed by using a model compound in a $^{13}$C nuclear magnetic resonance apparatus, and the $\alpha$-olefin content is calculated from the obtained value.

Preparation Process

In order to make solution-shaping or melt-shaping of the ultra-high-molecular-weight ethylene/$\alpha$-olefin copolymer possible, a diluent is incorporated into the copolymer in the present invention. Solvents for the ultra-high-molecular-weight ethylene copolymer and various waxy substances having a compatibility with the ultra-high-molecular-weight ethylene copolymer are used as the diluent.

A solvent having a boiling point higher, especially by at least 20°C, than the melting point of the copolymer is preferably used.

As specific examples of the solvent, there can be mentioned aliphatic hydrocarbon solvents such as n-nonane, n-decane, n-undecane, n-dodecane, n-tetradecane, n-octadecane, liquid paraffin and kerosene, aromatic hydrocarbon solvents such as xylene, naphthalene tetralin, butylbenzene, p-cymene, cyclohexylbenzene, diethylbenzene, pentylbenzene, dodecylbenzene, bicyclohexyl, decalin, methylnaphthalene and ethylnaphthalene, hydrogenated derivatives thereof, halogenated hydrocarbon solvents such as 1,1,2,2-tetrachloroethane, pentachloroethane, hexachloroethane, 1,2,3-trichloropropane, dichlorobenzene, 1,2,4-trichlorobenzene and bromobenzene, and mineral oils such as paraffin type process oil, naphthene type process oil and aromatic process oil.

Aliphatic hydrocarbon compounds and derivatives thereof are used as the wax.

The aliphatic hydrocarbon compound is a so-called paraffin wax composed mainly of a saturated aliphatic hydrocarbon compound and having a molecular weight lower than 2000, preferably lower than 1000, especially preferably lower than 800. As specific examples of the aliphatic hydrocarbon compound, there can be mentioned n-alkanes having at least 22 carbon atoms, such as docosane, tricosane, tetracosane and triacontane, mixtures containing an n-alkane as mentioned above as the main component and a lower n-alkane, so-called paraffin waxes separated and purified from petroleum, low-pressure and medium-pressure polyolefin waxes which are low-molecular-weight polymers obtained by polymerizing ethylene or copolymerizing ethylene with other $\alpha$-olefin, high-pressure polyethylene waxes, ethylene copolymer waxes, waxes obtained by reducing the molecular weight of polyethylene such as medium-pressure, low-pressure or high-pressure polyethylene by thermal degradation or the like, and oxidized waxes and maleic acid-modified waxes obtained by oxidizing the foregoing waxes or modifying the foregoing waxes with maleic acid.

As the hydrocarbon derivative, there can be mentioned fatty acids, aliphatic alcohols, fatty acid amides, fatty acid esters, aliphatic mercaptans, aliphatic aldehydes and aliphatic ketones having at least 8 carbon atoms, preferably 12 to 50 carbon atoms, or a molecular weight of 130 to 2000, preferably 200 to 800, which are compounds having at the terminal of an aliphatic hydrocarbon group (such as an alkyl or alkenyl group) or in the interior thereof, at least one, preferably one or two, especially preferably one, of functional groups such as a carboxyl group, a hydroxyl group, a carbamoyl group, an ester group, a mercapto group and a carbonyl group.

As specific examples, there can be mentioned capric acid, lauric acid, myristic acid, palmitic acid, stearic acid and oleic acid, aliphatic alcohols such as lauryl alcohol, myristyl alcohol, cetyl alcohol and stearyl alcohol, fatty acid amides such as caprylamide, laurylamide, palmitylamide and stearylamide, and fatty acid esters such as stearyl acetate.

The ratio between the ultra-high-molecular-weight ethylene copolymer and the diluent differs according to the kinds of them, but it is generally preferred that the above-mentioned ratio is in the range, of from 15/85 to 80/20, especially from 30/70 to 60/40, If the amount of the diluent is too small and below the above-mentioned range, the melt viscosity becomes too high, and melt kneading or melt shaping becomes difficult and such troubles as surface roughening of the shaped body and breaking at the drawing step are often caused. If the amount of the diluent is too large and exceeds the above-mentioned range, melt kneading is difficult and the drawability of the shaped body is poor.

It is preferred that melt kneading be carried out at a temperature of 150 to 300 C, especially 170 to 270° C. If the temperature is too low and below the above-mentioned range, the melt viscosity is too high and melt shaping becomes difficult. If the temperature is too high and exceeds the above-mentioned range, the molecular weight of the ultra-high-molecular-weight ethylene copolymer is reduced by thermal degradation and a shaped body having a high elastic modulus and a high strength can hardly be obtained. Mixing can be accomplished by dry blending using a Henschel mixer or a V-type blender or by melt mixing using a single-screw or multiple-screws extruder.

Melt shaping is generally accomplished according to the melt extrusion shaping method. For example, filaments to be drawn can be obtained by melt extrusion through a spinneret, and a film, sheet or tape to be drawn can be obtained by extrusion through a flat die or ring die. Furthermore, a pipe (parison) to be draw-blow-formed can be obtained by extrusion through a circular die. The present invention is especially valuable for the production of drawn filaments. In this case, a melt extruded from a spinneret may be drafted, that is, elongated in the molten state. The draft ratio can be defined by the following formula

draft ratio $= V/V_o$   (1)

wherein $V_o$ stands for the extrusion speed of the molten resin in a die orifice and V stands for the winding speed of the cooled and solidified undrawn body.

The draft ratio is changed according to the temperature of the mixture, the molecular weight of the ultra-high-molecular-weight ethylene copolymer and the like, but the draft ratio can be ordinarily adjusted to at least 3, preferably at least 6.

Of course, melt shaping is not limited to extrusion shaping, and in the production of various draw-formed vessels, a preform to be draw-blow-formed can be prepared by injection molding. The shaped body can be cooled and solidified by forced means such as air cooling or water cooling.

The so-obtained undrawn shaped body of the ultra-high-molecular-weight ethylene copolymer is subjected to a drawing operation. The degree of drawing is, of course, such that a molecular orientation is effectively given in at least one axial direction.

It is generally preferred that drawing of the shaped body of the ultra-high-molecular-weight ethylene copolymer be carried out at 40 to 160°C, especially 80 to 145°C. As the heating medium for heating and maintaining the undrawn shaped body at the above-mentioned temperature, there can be used any of air, steam and liquid media. If the drawing operation is carried out by using, as the heating medium, a solvent capable of removing the above-mentioned diluent extraction and having a boiling point higher than that of the composition constituting the shaped body, such as decalin, decane or kerosene, removal of the diluent becomes possible, and drawing unevenness can be eliminated at the drawing step and a high draw ratio can be adopted. Accordingly, use of the above-mentioned solvent is preferred.

The means for removing the excessive diluent from the ultra-high-molecular-weight ethylene copolymer is not limited to the above-mentioned method. For example, the excessive diluent can be effectively removed according to a method in which the undrawn shaped body is treated with a solvent such as hexane, heptane, hot ethanol, chloroform or benzene and is then drawn, or a method in which the drawn shaped body is treated with a solvent such as hexane, heptane, hot ethanol, chloroform or benzene, whereby a drawn shaped body having a high elastic modulus and a high strength can be obtained.

The drawing operation can be performed in a single stage or two or more stages. The draw ratio depends on the desired molecular orientation and the effect of improving the melting temperature characteristic by the molecular orientation. In general, however, satisfactory results can be obtained if the drawing operation is carried out so that the draw ratio is 5 to 80, especially 10 to 50.

In general, multi-staged drawing conducted in at least two stages is advantageous. Namely, it is preferred that at the first stage, the drawing operation be carried out at a relatively low temperature of 80 to 120°C while extracting the diluent contained in the extruded shaped body and at the second and subsequent stages, drawing of the shaped body be carried out at a temperature of 120 to 160°C, which is higher than the drawing temperature adopted at the first stage.

The uniaxial drawing operation for a filament, a tape or a uniaxially drawn film can be accomplished by stretch-drawing between rollers differing in the peripheral speed. For the production of a biaxially drawn film, stretch-drawing is performed in the longitudinal direction between rollers differing in the peripheral speed, and simultaneously, stretch-drawing is performed in the lateral direction by using a tenter or the like. Biaxial drawing can also be accomplished by the inflation method. Furthermore, in case of a three-dimensional shaped body such as a vessel, an intended biaxially drawn shaped body can be obtained by a combination of stretch-drawing in the lateral direction and expansion drawing in the circumferential direction.

Drawn Shaped Body

The drawn shaped body of the present invention is formed from an ultra-high-molecular-weight ethylene/α-olefin copolymer having the above-mentioned chemical composition and molecular weight, and this shaped body is molecularly oriented prominently in the direction of the fiber axis.

The degree of molecular orientation in the shaped body can be known by the X-ray diffractometry, the birefringence method, the fluorescence polarization method or the like. The drawn filament of the ultra-high-molecular-weight ethylene copolymer according to the present invention is characterized in that the orientation degree by the half width in the X-ray diffractometry, described in detail, for example, in Yukichi Go and Kiichiro Kubo, Kogyo Kagaku Zasshi, $\underline{39}$, 922 (1939), that is, the orientation degree (F) defined by the following formula:

$$\text{orientation degree } F = \frac{90^{\bullet} - H^{\bullet}/2}{90^{\bullet}} \quad (2)$$

wherein H° stands for the half width (°) of the intensity distribution curve along the Debye ring of the strongest paratroope plane on the equator line,
is at least 0.93, preferably at least 0.95.

Although the drawn shaped body of the present invention has such a high molecular orientation as described above, the drawn shaped body has such a high breaking energy as cannot be expected from the values of the conventional, highly molecularly oriented fibers, that is, a breaking energy of at least 80 J/g, preferably at least 100 J/g, especially preferably at least 120 J/g.

As pointed out hereinbefore, the breaking energy of the drawn shaped body of the ultra-high-molecular-weight ethylene°α-olefin copolymer can be determined by integrating the load by the displacement at the tensile test. More specifically, at the tensile test (23°C, 100% strain/min), a stress-strain curve is drawn on a recording chart, and the breaking energy is calculated by determining the area of the portion surrounded by the perpendicular line drawn to the strain axis from the breaking point and the strain axis.

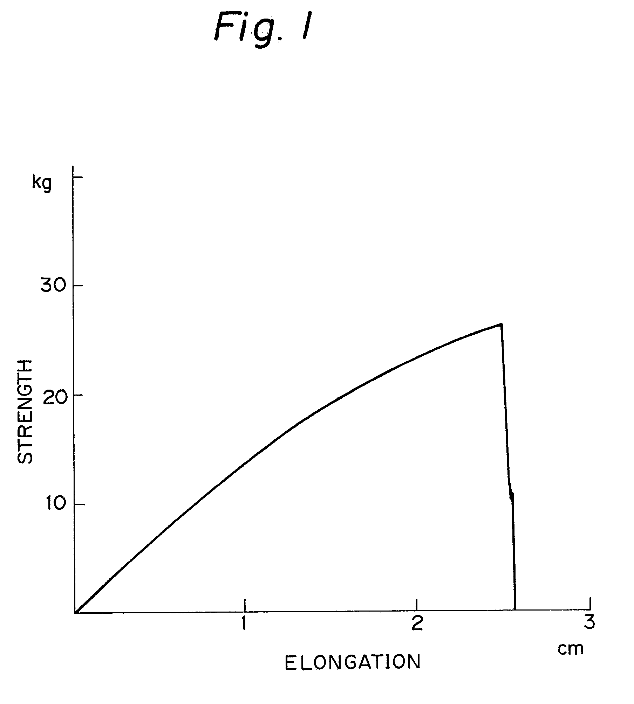

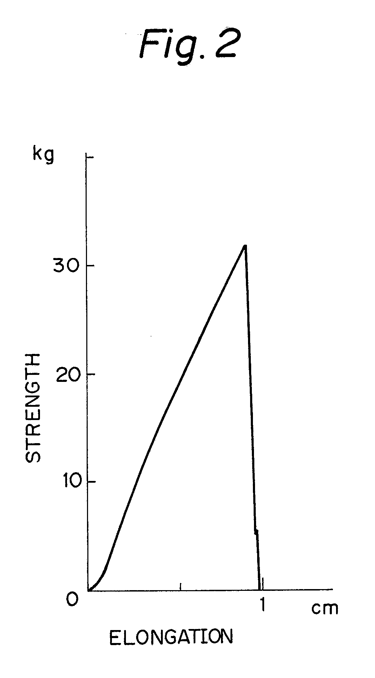

Fig. 1 is a stress-strain curve of a drawn filament of an ultra-high-molecular-weight ethylene/α-olefin copolymer according to the present invention, and Fig. 2 is a stress-strain curve of a drawn filament of ultrahigh-molecular-weight polyethylene. In these curves, the breaking energy corresponds to the integration value of up to the breaking point. From the results shown in Figs. 1 and 2, it will be understood that the drawn shaped body of the present invention should naturally have a combination of a high tensile strength and a high elongation at break corresponding to this high breaking energy. The tensile strength and elongation at break corresponding to the above-mentioned breaking energy are at least 2.0 GPa and at least 6%, preferably at least 2.2 GPa and at least 9%, especially preferably at least 2.4 GPa and at least 15%.

From the viewpoint of the heat resistance, it is preferred that the molecularly oriented shaped body of the ultra-high-molecular-weight ethylene/α-olefin copolymer should have at least one crystal melting peak (TP) at a temperature higher by at least 20°C than the inherent crystal melting temperature (Tm) of the copolymer and the melting heat quantity based on this crystal melting peak (TP) be at least 15%, especially at least 20%, particularly especially at least 30%, based on the total melting heat quantity.

The inherent crystal melting temperature (Tm) of the ultra-high-molecular-weight ethylene copolymer can be determined according to a method in which the shaped body is completely molten once and then cooled to moderate the molecular orientation in the shaped body and the temperature is elevated again, that is, by the second run in a so-called differential scanning calorimeter.

More specifically, in the molecularly oriented shaped body of the present invention, no crystal melting peak is present in the inherent crystal melting temperature region of the copolymer or if present, the peak appears only as tailing. The crystal melting peak (TP) appears in the temperature range of from Tm + 20°C to Tm + 150° especially from Tm + 20°C to Tm + 100°C, and this peak (TP) often appears in the form of a single peak or a plurality of peaks in the above-mentioned temperature range.

It is considered that this high crystal melting peak (TP) prominently improves the heat resistance of the shaped body of the ultra-high-molecular-weight ethylene/α-olefin copolymer and makes a contribution to maintenance of a high strength or elastic modulus retention ratio after the heat history at a high temperature.

In the present invention, the melting point and crystal melting heat quantity are determined according to the following methods.

The melting point is measured by using a differential scanning calorimeter (Model DSC II supplied by Perkin-Elmar) in the following manner. About 3 mg of a sample was wound on an aluminum plate having a size of 4 mm x 4 mm x 0.2 mm (thickness) to restrain the sample in the orientation direction. Then, the sample wound on the aluminum plate is sealed in an aluminum pan to form a measurement sample. The same aluminum plate is sealed in an empty aluminum pan to be placed in a reference holder, whereby a thermal balance is maintained. At first, the sample is maintained at 30°C for about 1 minute, and then, the temperature is elevated to 250°C at a temperature-elevating rate of 10°C/min to complete the measurement of the melting point at the first temperature elevation. Subsequently, the sample is maintained at 250°C for 10 minutes, and the temperature is dropped at a temperature-dropping rate of 20°C/min and the sample is maintained at 30°C for 10 minutes. Then, the second temperature elevation is carried out by elevating the temperature to 250°C at a temperature-elevating rate of 10°C/min to complete the measurement of the melting point at the second temperature elevation (second run). The maximum value of the melting peak is designated as the melting point. In the case where the peak appears as a shoulder, tangential lines are drawn on the bending point just on the low temperature side of the shoulder and on the bending point just on the high temperature side of the shoulder, and the point of intersection is designated as the melting point.

A straight line (base line) is drawn between the points of 60°C and 240°C on the endothermic curve and a perpendicular line is drawn on the point higher by 20°C than the inherent crystal melting temperature (Tm) of the ultra-high-molecular-weight ethylene copolymer determined as the main melting peak at the second temperature elevation. The area of the low temperature side of the portion surrounded by these lines is measured and the crystal melting heat quantity based on the inherent crystal melting (Tm) of the ultra-high-molecular-weight ethylene copolymer is calculated from this area, while the area of the high temperature side of the portion surrounded by these lines is measured and the crystal melting heat quantity based on the crystal melting (Tp) making contributions to manifestation of the functions of the shaped body of the present invention is calculated from the area. The melting heat quantities based on the melting peaks Tp1 and Tp2 are similarly calculated. Namely, the area of the portion surrounded by the perpendicular line drawn from the point of Tm + 20°C and the perpendicular line drawn from the point of Tm + 35°C is measured and the melting heat quantity based on Tp2 is calculated from this area, and the area of the high temperature side is measured and the melting heat quantity based on Tp1 is calculated from this area.

The so-obtained drawn shaped body can be heat-treated under restraint or certain shrinkage, if desired. This heat treatment is conducted at 100 to 140°C, especially 120 to 140°C, for 1 to 15 minutes, especially 3 to 10 minutes. By this heat treatment, the crystallization of the oriented crystal portion is further advanced and the crystal melting temperature is shifted to a higher temperature, and it is expected that the heat resistance, strength and elastic modulus will be further improved.

The drawn shaped body of the ultra-high-molecular-weight ethylene/$\alpha$-olefin copolymer according to the present invention is excellent in the combination of the breaking energy value and strength. Because of this characteristics, the drawn shaped body of the present invention is valuably used as industrial textile materials such as high-tenacity multi-filament yarns, strings, ropes, nonwoven fabrics and woven fabrics and packaging materials such as packing tapes. Especially, while utilizing the high breaking energy characteristic, the drawn shaped body of the present invention is preferably used for various products on which an impulse force is imposed, for example, fishing ropes such as floating net ropes, ocean raising ropes, mooring ropes and anchor ropes, ship ropes such as hawsers, tug ropes, operation mark ropes, yacht ropes and mooring ropes, ground ropes such as agricultural ropes, operation marking ropes, loading ropes for trucks, sheet edge ropes, tent edge ropes and tent-fixing ropes, marine sport ropes such as water skis ropes and paraglider ropes, marine operation ropes such as submarine oil digging rig-fixing ropes, pendant ropes for these fixing ropes, submarine manganese module-digging ropes, hydrothermal deposit-digging ropes and suspension bridge-supporting ropes, nets formed by knitting these ropes, such as dragnets, trawls, winding nets, set nets, gill nets, casting nets, other fishing nets, safety nets, guard nets and other protecting nets, and products obtained by weaving these ropes, such as safety belts, canvas cloths and bulletproof cloths.

The present invention will now be described in detail with reference to the following examples that by no means limit the scope of the invention.

Example 1

(Polymerization for production of ultra-high-molecular-weight ethylene/butene-1 copolymer)

Slurry polymerization for formation of an ultra-high-molecular-weight ethylene/butene-1 copolymer was carried out by using a Ziegler type catalyst and 1 $\ell$ of n-decane as the polymerization solvent. A mixed monomer gas comprising ethylene and butene-1 at a molar ratio of 97.0/3.00 was continuously fed into a polymerization vessel so that the pressure in the polymerization vessel was maintained at 5 kg/cm². Prior to the polymerization, 30 m$\ell$ of hydrogen was charged in the polymerization vessel for adjusting the molecular weight. The polymerization was carried out at a reaction temperature of 70°C and completed in about 2 hours. The amount of the obtained powdery ultra-high-molecular-weight ethylene/butene-1 copolymer was 135 g, and the intrinsic viscosity (at 135°C in decalin) was 11.2 d$\ell$/g and the butene-1 content determined by an infrared spectrophotometer was 1.23 mole%.

(Preparation of drawn shaped body of ultra-high-molecular-weight ethylene/butene-1 copolymer)

A mixture comprising 25 parts by weight of the so-obtained powdery ultra-high-molecular-weight ethylene/butene-1 copolymer and 75 parts by weight of a paraffin wax having a melting point of 69°C and a molecular weight of 490 was melt-spun under the following conditions. More specifically, 0.1 part by weight of 3,5-di-tert-butyl-4-hydroxytoluene was added as the process stabilizer to 100 parts by weight of the mixture. Then, the mixture was melt-kneaded at a set temperature of 190°C by using a screw type extruder (screw diameter = 2.5 mm, L/D = 25; supplied by Thermoplastics Co.), and the kneaded mixture was melt-spun from a spinning die having an orifice diameter of 2 mm, which was attached to the extruder. The extruded melt was taken up at a draft ratio of 40 with an air gap having a length of 180 cm and cooled and solidified in the air to obtain an undrawn fiber. The undrawn fiber was drawn under the following conditions.

Two-staged drawing was carried out by using three sets of godet rolls. The heating medium in a first drawing tank was n-decane and the temperature was 110°C, and the heating medium in a second drawing tank was ethylene glycol and the temperature was 145°C. The effective length of each drawing tank was 50 cm. The rotation speed of the first godet roll was adjusted to 0.5 m/min and a drawn fiber having a desired draw ratio was obtained by appropriately adjusting the rotation speed of the third godet roll. The rotation speed of the second godet roll was appropriately set so that the drawing operation could be performed stably.

Substantially all of the initially incorporated paraffin wax was extracted into n-decane during the drawing operation. The drawn fiber was washed with water and dried at room temperature under reduced pressure over a whole day and night, and various physical properties were measured. Incidentally, the draw ratio was calculated from the rotation speed ratio between the first godet roll and the third godet roll.

(Measurement of tensile characteristics and breaking energy)

The stress rate and breaking energy were measured by an Instron universal tensile testor (Model 1122 supplied by Instron Co.) at room temperature (23°C). The clamp length was 250 mm, and the stress rate was 250 mm/min (l00%/min. strain rate). The sectional area of the fiber necessary for calculation was determined from the weight based on the supposition that the density was 0.960 g/cc. The breaking energy of the sample was determined from the area of the strain-stress curve, as described hereinbefore, and the value was normalized by dividing the obtained value by the weight of the sample between the clamps. The tensile characteristics of the obtained drawn sample are shown in Table 1.

Table 1

Sample    sample 1
Draw ratio    13.95
Strength    2.42 GPa
Elongation    10.04%
Breaking energy    148.7 J/g

Incidentally, the fineness of the obtained fiber was 9.2 denier as the monofilament denier. At the tensile test, a multi-filament fiber formed by gathering 100 of such single filaments was used. The obtained stress-strain curve is shown in Fig. 1. The orientation degree of the fiber obtained by the X-ray diffractometry was 0.955.

The inherent crystal melting peak of the oriented drawn shaped body (sample 1) of the ultra-high-molecular-weight copolymer was observed at 126.0°C, and the ratio of Tp to the total crystal peak area was 45.3%.

Comparative Example 1

(Preparation of drawn shaped body of ultra-highmolecular-weight ethylene homopolymer)

A mixture comprising 25 parts by weight of a powdery ultra-high-molecular-weight ethylene homopolymer (intrinsic viscosity $[\eta]$ = 11.8 d$\ell$/g) and 25 parts by weight of a paraffin wax having a melting point of 69°C and a molecular weight of 490 was spun and drawn in the manner described in the paragraph of "Preparation of drawn shaped body of ultra-high-molecular-weight ethylene/butene-1 copolymer" in Example 1. The tensile characteristics of the obtained drawn shaped body are shown in Table 2.

Table 2

Sample    sample 2
Draw ratio    28
Strength    3.38 GPa
Elongation    3.30%
Breaking energy    58.2 J/g

Incidentally, the fineness of the obtained fiber was 8.0 denier as the monofilament denier. A multifilament fiber formed by gathering 100 of such single filaments was used at the tensile test. The stress-strain curve of

9

the obtained fiber is shown in Fig. 2. The orientation degree of the obtained fiber by the X-ray diffractometry was 0.975.

The inherent crystal melting peak of the oriented drawn shaped body (sample 2) of the ultra-high-molecular-weight ethylene homopolymer was observed at 135.5°C, and the ratio of Tp to the total crystal melting peak area was 13.7%.

## Claims

1. A process for producing a drawn shaped body of an ultra-high-molecular-weight ethylene/α-olefin copolymer, which comprises (a) extruding an ultra-high-molecular-weight ethylene/α-olefin copolymer dope comprising 15 to 80 parts by weight of an ultra-high-molecular-weight ethylene/α-olefin copolymer having an intrinsic viscosity [η] of at least 5 dl/g, in which the content of an α-olefin having at least 4 carbon atoms is 0.2 to 5 mole%, and 85 to 20 parts by weight of a diluent from a nozzle of a shaping die at a temperature sufficient to maintain the dope in a flowable state, (b) taking up the extrudate at a draft ratio of at least 3 and crystallizing the ultra-high-molecular-weight ethylene/α-olefin copolymer during or after the taking up operation to form a preliminary drawn oriented body, and (c) drawing the preliminarily drawn oriented body at a draw ratio of at least 3.

2. A process according to claim 1, wherein the intrinsic viscosity of the ultra-high-molecular-weight ethylene/α-olefin copolymer is 7 to 30 dl/g.

3. A process according to claim 1, or claim 2 for producing a formed drawn shaped body having a breaking energy of at least 80 J/g and an elongation at break of at least 6%.

4. A drawn shaped body of an ultra-high-molecular-weight ethylene/α-olefin copolymer having an intrinsic viscosity [η] of at least 5 dl/g and containing an α-olefin having at least 4 carbon atoms at a content of 0.2 to 5 mole%, where the orientation degree of the drawn shaped body is at least 0.93 determined as the orientation degree by the half width of the X-ray diffractometry and the breaking energy of the drawn shaped body is at least 80 J/g determined as the integration value of up to the breaking point in the stress-strain curve.

5. A drawn shaped body according to claim 4, which has a tensile strength of at least 2.0 GPa and an elongation at break of at least 6%.

6. A drawn shaped body according to claim 4 or claim 5 wherein the drawn shaped body has at least two crystal melting peaks when the measurement is conducted in the restricted state by a differential scanning calorimeter, the drawn shaped body has at least one crystal melting endothermic peak (Tp) at a temperature higher by a least 20°C than the inherent crystal melting temperature (Tm) of the ultra-high-molecular-weight ethylene/α-olefin copolymer determined as the main melting endothermic peak at the time of the second temperature elevation and the heat quantity based on this crystal melting endothermic peak (Tp) is at least 15% of the total melting heat quantity.

Fig. 1

# Fig. 2

| | DOCUMENTS CONSIDERED TO BE RELEVANT | | EP 88309110.0 |
| --- | --- | --- | --- |

| Category | Citation of document with indication, where appropriate, of relevant passages | Relevant to claim | CLASSIFICATION OF THE APPLICATION (Int. Cl.4) |
| --- | --- | --- | --- |
| X | EP - B1 - 0 115 192 (MITSUI PETRO-CHEMICAL INDUSTRIES, LTD.) <br> * Claims; page 3, lines 54-57; page 8, table 1 * | 1,2,4,5 | C 08 J 5/18 <br> D 01 F 6/46 |
| D | & JP-A2-59-130 313 | | |
| D | & JP-A2-59-187 614 | | |
| | -- | | |
| A | EP - A1 - 0 135 253 (MITSUI PETRO-CHEMICAL INDUSTRIES, LTD.) <br> * Claims; page 20, line 10 - page 22, line 1; page 22, example 1; page 25, table 1; page 14, line 27 - page 15, line 1 * | 1,2,4-6 | |
| | -- | | |
| A | EP - A1 - 0 181 016 (STAMICARBON B.V.) <br> * Claims; page 3, lines 25-33 * | 1,4 | TECHNICAL FIELDS SEARCHED (Int. Cl.4) <br><br> C 08 J <br> D 01 F <br> B 29 C |
| | ---- | | |

The present search report has been drawn up for all claims

| Place of search | Date of completion of the search | Examiner |
| --- | --- | --- |
| VIENNA | 20-12-1988 | WEIGERSTORFER |